# EUROPEAN PATENT APPLICATION

(11) **EP 4 180 119 A1**
(43) Date of publication of application: **17.05.2023**
(21) Application number: 21208016.2
(22) Date of filing: 12.11.2021
(51) Int. Cl.: B01J 4/00, B01J 19/00, B01J 19/18

(54) **REACTOR SYSTEM AND THERMAL CONDITIONING SYSTEM FOR A REACTOR SYSTEM**

(71) Applicant: Saravanos Process++ SRL, 1050 Ixelles (BE)
(72) Inventor: Saravanos, Panagiotis, 34001 Karystos (GR); Saravanos, Ioannis, 1930 Zaventem (BE)
(74) Representative: Calysta NV

(57) **Abstract**

A reactor system (99), comprising a plurality of reactor arrangements (1, 101), each reactor arrangement comprising: a first fluid end (3), a second fluid end (4),an inner flow element (10) comprising an inner wall (11) defining an inner flow path (12) within said inner wall, said inner flow path being fluidly connected to the first inner end, an outer flow element (20) comprising an outer wall (21) defining an outer flow path (22) between the outer wall and the inner wall, said outer flow path being fluidly connected to the first outer end, wherein the plurality of reactor arrangements are arranged in series, wherein the fluid outlet (4) of a first reactor arrangement (1) of the plurality of reactor arrangements is arranged upstream of the fluid inlet (103) of a second reactor arrangement (101 of the plurality of reactor arrangements.

## Description

The present invention relates to the field of continuous processing, in particular tubular reactors.

In general, processing can be divided into two types of processing: batch-type processing and continuous processing. Continuous processing has several advantages over batch-type processing. However, the known reactors that allow for continuous processing still have several disadvantages. Said known reactors for continuous processing can broadly be categorized in two types: continuous stirred-tank reactors (CSTR) and plug flow reactors (PFR).

CSTR usually include a tank in which product is continuously added and removed, having some type of agitator or mixer for causing turbulence and enhancing the reaction. Disadvantages include the fact that some portion of the product remains in the tank too long while another portion is removed too quickly.

PFR theoretically overcome this issue by making sure all product moves through a tube or pipe at the same speed. In practice the ideal theoretical behaviour is usually not reached completely; however, for the explanation herein tubular reactors aiming to apply this principle are referred to as PFR for simplicity. Although the reaction time may be improved over CSTR, the PFR entail several disadvantages, such as being harder to clean and being less suitable for solid suspension/dispersion.

Another disadvantage of known reactors is that they are often designed for a specific reaction, and are, therefore, not flexible in use.

Several thermal conditioning systems are known for influencing the temperature of the product in CSTR or PFR. The known systems usually provide very similar temperature effects to the product regardless of the how far in the continuous process the product is.

A first object of the present invention is to provide a new type of reactor system, which overcomes the disadvantages of the prior art, or at least provides an alternative.

A second object of the present invention is to provide a thermal conditioning system for a reactor system which overcomes the disadvantages of the prior art, or at least provides an alternative.

A third object of the present invention is to provide a method for performing a reaction that overcomes the disadvantages of the prior art, or at least provide an alternative.

One or more of the objectives of the invention are achieved with a reactor system according to the invention. The reactor system comprises at least one reactor arrangement.

The reactor arrangement comprises a first fluid end and a second fluid end. One of the first and second fluid end is a fluid inlet of the reactor arrangement, and the other of the first and second fluid end is a fluid outlet of the reactor arrangement. The reactor arrangement further comprises an inner flow element comprising an first inner end connected to the first fluid end and an inner wall defining an inner flow path within said inner wall, said inner flow path being fluidly connected to the first inner end. The reactor arrangement further comprises an outer flow element comprising an first outer end connected to the second fluid end and an outer wall defining an outer flow path between the outer wall and the innerwall, said outer flow path being fluidly connected to the first outer end.

The reactor arrangement allows a fluid to flow from the fluid inlet to the fluid outlet, thereby passing the inner flow path and the outer flow path. The fluid can flow first through the inner flow element and then through the outer flow element; or first through the outer flow element and then through the inner flow element. This depends on which of the first and second fluid end is used as fluid inlet and which as fluid outlet.

The fluid may be any fluid that is to be processed, e.g. including a liquid or a gas. Within the context of this invention, processing is to be interpreter broadly. Processing may e.g. entail that a chemical process takes place in the reactor system. The chemical process may e.g. relate to one, two, three or more substances. Processing may e.g. entail that two or more substances are mixed in the reactor system. Different substances may e.g. relate to different products, being in the same or a different phase. For example, a first substance may be in a gaseous phase and a second substance may be in a liquid phase. For example, a first substance may be in a liquid phase and a second substance may be in a solid phase, e.g. as solid particles. It is thus noted that when reference is made herein to "fluid", said fluid may comprise solid phase substances as well. Said solid particles may e.g. be additives, ingredients, or agglomerates formed during the reaction. Different substances can also relate to the same products but being in different phases, e.g. liquid and gaseous.

The inner flow element defines the inner flow path within the inner wall. The inner flow element and the inner flow path may e.g. have a circular cross-section. Optionally the inner flow element is a tubular reactor, optionally being configured to function as a plug flow reactor. It also possible that the inner flow element has a triangular or rectangular cross-section. The inner flow path is fluidly connected to the first inner end, such that the fluid can flow from the first inner end into the inner flow path; or out of the inner flow path towards the first inner end. Optionally additional elements are arranged within the inner flow element, e.g. such that the inner flow path has an annular cross-section.

The outer flow element defines the outer flow path between the outer wall and the inner wall. The outer flow path is fluidly connected to the first outer end, such that the fluid can flow towards the first outer end from the outer flow path; or from the first outer end into the outer flow path. For example, the fluid may flow into a first direction through the inner flow path and then in a substantially opposite direction through the outer flow path. This allows for a compact design while increasing the distance travelled by the fluid, which improves the reaction process. The outer flow path may e.g. have an annular cross-section. The outer flow path may e.g. at least partially encompass the inner flow path. It is also possible that outer flow path is arranged next to the inner flow path, separated by the inner wall, wherein optionally the outer flow path has a circular, triangular, or rectangular cross-section.

The reactor system, in particular the inner flow element and the outer flow element, may be made of the known materials, such as steel, a plastic, or PVC. The choice of material may depend on the products, pressures, and temperatures to be used in the reactor system.

In embodiments, the inner wall and the outer wall are coaxial. Thus, the inner wall has an inner wall longitudinal axis and the outerwall has an outer wall longitudinal axis, wherein the inner wall longitudinal axis and the outer wall longitudinal axis at least partially coincide. This embodiment allows for a compact construction of the reactor arrangement wherein the reaction forces and the weight are balanced. Furthermore, the inner flow element is at least partially surrounded by the outer flow path. This has the advantage that the pressure difference between both sides of the inner wall is relatively small. The inner wall is only subjected to a relatively small force which lowers the design requirements, and as such the manufacturing and maintenance cost.

In embodiments, the inner flow element has an second inner end which opens into the outer flow element. Thus, the fluid flows from the inner flow element into the outer flow element or vice versa via the second inner end. The second innerend fluidly connects the inner flow element to the outer flow element. The second inner end may be a straight open end, a diverging open end, or a converging open end. The second inner end of the inner flow element may comprise one or more flow guiding elements for guiding the fluid into the outer flow element.

In embodiments, the inner flow element and the outer flow element are connected to each other with a releasable connection. Optionally the reactor system comprises a first inner flow element having a first diameter and a second inner flow element having a second diameter, wherein the first diameter is different from the second diameter. The releasable connection is configured to connect either of the first and second inner flow element with the outer flow element. Thus, this embodiment allows to exchange an inner flow element with another inner flow element having a different diameter, which may e.g. be the diameter of the inner wall, wherein the inner wall may e.g. be have a circular cross-section. Advantageously, this embodiment provides modularity. By changing the diameter of the inner flow element, the speed and turbulence of the fluid in the inner flow element can be changed, depending on the needs for the reaction. In case the inner flow element with a larger diameter is arranged in the outer flow element, the outer flow path may become smaller, since this is defined by the distance of the inner wall to the outer wall.

In embodiments the reactor system comprises a plurality of reactor arrangements. For example, the reactor system may comprise at least two, three, four, five, six, ten, fifty or a hundred reactor arrangements.

Preferably, the plurality of reactor arrangements are arranged in series, wherein the fluid outlet of a first reactor arrangement of the plurality of reactor arrangements is arranged upstream of the fluid inlet of a second of the plurality of reactor arrangements. Thus, the reactor system is configured to guide the fluid first through the first reactor arrangement and later through the second reactor arrangement. The fluid inlet of the second reactor arrangement is in fluid connection with the fluid outlet of the first reactor arrangement, optionally via additional piping, equipment, and/or appendage(s).

By arranging the plurality of reactor arrangement in series, the fluid is flowing through more than one reactor arrangement. The fluid is thus subjected to the reaction for a longer time, thereby improving the result. In every reactor arrangement through which the fluid flows, the fluid is subjected to both the inner flow path and the outer flow path. The repetition of change between inner and outer flow path further enhances the reaction. Preferably, the reactor system is a modular reactor system, and the reactor arrangements are configured to be arranged in series as modular modules. The series of modular modules has the advantage that more or less modules can be provided based on the desired length of the reaction.

In embodiments, the inner wall and the outer wall have a longitudinal axis which extend in a substantially vertical direction. In embodiments wherein the inner wall and the outer wall are coaxial, the inner wall and outer wall have the same longitudinal axis. In other embodiments the inner wall may have an inner wall longitudinal axis which extends in a substantially vertical direction, and the outer wall may have an outer wall longitudinal axis which extends in a substantially vertical direction.

In these embodiments, the reactor system is configured to guide the flow of fluid mainly in a vertical direction. By using vertical space for guiding the flow, the reactor length, i.e. the distance travelled by the fluid in the reactor, is increased while keeping the footprint of the reactor system small. This allows to achieve relatively long reactor lengths while keeping the reactor system relatively compact and occupying only a relatively small space in e.g. a production plant or a lab. Furthermore, by making use of gravity for a part of the flow path, the pressure drop over each reactor arrangement can be limited.

In embodiments, the fluid is configured to flow upwards through the inner flow element and downwards through the outer flow element. This may in particular be advantageous when the fluid contains solid particles. In the inner flow element the flow will be faster and in an opposite direction of gravity exerting a downwards force on the solid particles. This may enhance the reaction. Furthermore, the solid particles which are not dissolved in the fluid will either be guided upwards or fall downwards, so that they are ultimately either still dissolved or collect at a bottom. In this arrangement, there are less locations in which said substances accumulate, and these locations are easier to clean.

In embodiments, the fluid is configured to flow downwards through the inner flow element and upwards through the outer flow element. This may in particular be advantageous when the fluid contains a liquid and a gaseous substance. In the inner flow element the flow will be faster and in an opposite direction of natural direction the gaseous substance would flow. This may enhance the reaction.

Optionally the reactor arrangement, e.g. the inner flow path, is configured to guide the fluid upwards at a first velocity, and the reactor arrangement, e.g. the outer flow path, is configured to guide the fluid downwards at a second velocity, wherein the first velocity is greater that the first velocity. For example, the inner flow element may be relatively narrow and the outer flow path may be relatively wide. The change from the first velocity to the second velocity enhances the reaction. This effect is further increased when a plurality of reactor arrangements are arranged in series such that the fluid alternates between the first and second velocity multiple times. Preferably, the first velocity is great enough to achieve a plug-flow behaviour. Preferably, the second velocity is greater than a sedimentation velocity. The sedimentation velocity depends on the material and particle diameter; for example for sand the sedimentation can be approximated at 2.5 cm/s, for salt at 0.025 cm/s, and for clay at 0.00025 cm/s. The first and second velocity can e.g. be controlled by controlling a pump or compressor which is configured to force the fluid through the reactor system. It is also possible to change the first velocity and the second velocity by replacing the inner flow element with another inner flow element having a different diameter.

Optionally at least the first velocity may be a velocity at which flow of the fluid is turbulent, for example having a Reynolds number larger than 2900 or larger than 3500. The turbulence may improve the reaction.

In embodiments, the inner flow element and/or the outer flow element comprise one or more flow diversion elements, wherein said flow diversion elements are protrusions extending inwards from the innerwall or outer wall. Optionally said flow diversion elements extend at a downwards inclination. The flow diversion elements may increase shear forces and thereby mixing. By extending at said downwards inclination, it is avoided that product accumulates on the flow diversion elements and/or between the flow diversion elements and the inner or outer wall.

In embodiments, the inner and outer flow element may be free of flow diversion elements. This may avoid excessive shear forces within the fluid, which may in particular be advantageous to reach a plug-flow-like behaviour.

In embodiments wherein the reactor system comprises the plurality of reactor arrangements, the longitudinal axis of the inner wall and outer wall of the first reactor arrangement extend parallel to the longitudinal axis of the inner wall and the outer wall of the second reactor arrangement, and optionally also extends in a substantially vertical direction. Thus, the plurality of reactor arrangement are arranged physically parallel to each other, while optionally being arranged fluidically in series. This physical arrangement allows for a compact and modular arrangement.

In embodiments wherein the reactor system comprises the plurality of reactor arrangements, the first reactor arrangement is arranged horizontally spaced of the second reactor arrangement. For example, the first and second reactor arrangement are arranged next to each other. This physical arrangement allows for a compact and modular arrangement.

In embodiments, the outer wall has a straight wall section which at least partially surrounds the inner wall, and an end section connected to the straight wall section, wherein the end section comprises a conical wall. Optionally the inner wall also has straight inner wall section, such that the outer flow path between the inner wall and the outerwall is substantially straight. The end section is configured to reverse a flow direction of the fluid when the fluid flows out of the inner flow path into the outer flow path or vice versa. By providing the conical wall, said reversing is improved.

In embodiments, the reactor system is modular. The inventors have found a reactor system that comprises several modules, which can very easily be added, connected, or removed. This allows to manufacture a limited number of different types of components, which can be used to make a reactor system that can be used for many different reactions or processes. It also allows to easily expand or adapt a reactor system when this is desired. Furthermore, the reactor system can easily be assembled on location which is beneficial for transport in comparison to conventional reactor systems which may require special transport. The modularity can be improved using features explained herein, such as the releasable connection for the inner flow element with the outer flow element; the connection section; the possibility the connect various components to the second fluid end.

In embodiments, each reactor arrangement comprises a connection section, preferably arranged at a bottom end of the reactor arrangement. The connection section preferably comprises one or more connectors for connecting another reactor arrangement, piping, equipment, or appendages. The use of connectors advantageously allows to easily add components thereby improving the modularity of the system. The connectors may e.g. be flanges, wherein the pressure rates and sizes can e.g. be chosen in function of the envisaged application. It is also possible that the connectors are tri-clamps, e.g. when the reactor arrangement is configured to be used in hygienic or pharmaceutical applications.

In embodiments, the connection section comprises: a first connector, preferably arranged vertically, for connecting another reactor arrangement, piping, equipment, or appendages to the first fluid end. For example, the first fluid end can be connected to the second fluid end of another reactor arrangement or to a pump. In embodiments, the connection section comprises a second connector, preferably arranged vertically, for connecting another reactor arrangement, piping, equipment, or appendages to the second fluid end via a second fluid end branch. In embodiments, the connection section comprises a third connector, preferably arranged horizontally, for connecting another reactor arrangement, piping, equipment, or appendages to the second fluid end. It is possible that the connection section comprises the first connector and the second connector; or the first connector and the third connector; or the first connector, the second connector, and the third connector.

In this context, when it is said that a connector is arranged vertically, this means that the connector is configured to connect a pipe that extends horizontally. Similarly, when it is said that a connector is arranged horizontally, this means that the connector is configured to connect a pipe that extends vertically.

In embodiments wherein the connection section comprises the second connector and the third connector, a connection is available to the second fluid end and to the second fluid end branch. The second fluid end may e.g. be relatively wide, e.g. having the same diameter as an outlet flow element, while the second fluid end branch is relatively narrow, optionally having the same diameter as the first fluid end. Depending what type of component is to be connected, a choice can be made between the second and third connector, thereby improving the flexibility and modularity of the system.

In embodiments, the connection section comprises a fourth connector, preferably arranged vertically, for connecting another reactor arrangement, piping, equipment, or appendages to the second fluid end via a second fluid end branch. In embodiments, the connection section comprises a fifth connector, preferably arranged vertically, for connecting another reactor arrangement, piping, equipment, or appendages to the second fluid end via a second fluid end branch.

In particular embodiments, the connecting section may have the first connector, and the second connector, and optionally also fourth connector and fifth connector, arranged at different vertical sides of the connection section, and the third connector arranged at a horizontal side, e.g. a bottom side. By arranging each connection at different sides, components can be connecting to each connector without obstructing each other.

In embodiments, the third connector may be larger than the first and second connector, and optionally also larger than the fourth and fifth connector when present.

In embodiments, the reactor arrangement comprises a pipe section, connected, preferably via a connector, to the first or second fluid end. The connector may e.g. be the first, second, third, fourth or fifth connector of the connection section. The pipe section may e.g. connect the first or second fluid end of the reactor arrangement to a pump or compressor or the first or second fluid end of another reactor arrangement. The pipe section may e.g. connect the second fluid end of the reactor arrangement to the first fluid end of another reactor arrangement. Optionally the pipe section comprises one or more bents, e.g. for allowing thermal expansion.

Any reference to "pipe" herein may be considered as synonym for terms such as conduit, tube, tubing, piping. Any "pipe (section)" may be made of the known materials, such as steel, a plastic, or PVC. The choice of material may depend on the products, pressures and temperatures to be used in the reactor system.

In embodiments, the reactor arrangement comprises an outlet funnel connected, preferably via a connector, to the second fluid end. The connector may e.g. be the third connector of the connection section, or the first, second, fourth or fifth connector. The outlet funnel may comprise a wider end which is connected to the second fluid end and a narrower end which is arranged lower than the wider end. The funnel advantageously guides all substances to the narrower end, including solid particles that have not been dissolved yet. This reduces accumulation of undissolved product in the reactor arrangement, which also reduces the need for cleaning. In addition, when cleaning is required, it may be easier to clean the outlet funnel, e.g. by using the connector.

In embodiments, the reactor arrangement comprises an agitator connected, preferably via a connector, to the second fluid end. The connector may e.g. be the third connector of the connection section, or the first, second, fourth or fifth connector. The agitator may be configured to increase turbulence of the fluid. The agitator can e.g. a magnetic or mechanical agitator. The fluid may flow out of the reactor arrangement via the agitator, or via another connector, e.g. one of the connectors of the connection section. The agitator advantageously increases the turbulence and improves the reaction.

In embodiments, the reactor arrangement comprises a reversed reactor arrangement connected, preferably via a connector, to the second fluid end. The connector may e.g. be the third connector of the connection section, or the first, second, fourth or fifth connector. The reversed reactor may be arranged upside down. For example, the reactor system may be configured to guide the fluid from the inner flow path to the outer flow path of the reactor arrangement towards the outer flow path of the reversed reactor arrangement and then inner flow path of the reversed reactor arrangement; or in the opposite direction. For example, the reactor system may be configured to guide the fluid from the outer flow path to the inner flow path of the reversed reactor arrangement towards the inner flow path of the reactor arrangement and then outer flow path of the reactor arrangement, or in the opposite direction. Advantageously the reactor length is increased, and as such the reaction can be improved, while keeping the footprint of the reactor system relatively small.

In embodiments, the reactor arrangement comprises a tank reactor connected, preferably via a connector, to the second fluid end. The connector may e.g. be the third connector of the connection section, or the first, second, fourth or fifth connector. The tank reactor may e.g. a continuous stirred-tank reactor, e.g. comprising a mechanical stirrer, such as a mixer. In this embodiment the reactor system combines the principles of plug-flow reactors and continuous stirred-tank reactors, thereby improving the reaction and/or mixing. For example, the reactor system may be configured to guide the fluid through the reactor arrangement into the tank reactor, and optionally thereafter to a second reactor arrangement.

In embodiments, the reactor arrangement comprises an ingredient adding module, for example connected, preferably via a connector, to the second fluid end. The connector may e.g. be the first, second, third, fourth, or fifth connector of the connection section. The ingredient adding module is configured to add ingredients to the fluid. The ingredients can e.g. be part of the reaction, or catalysator, or intended to be mixed into the fluid. The ingredient can e.g. be solid particles. The ingredient adding module can e.g. be configured to add the ingredients after the fluid has left a first reactor arrangement while the fluid will still be guided through one or more further reactor arrangements. This embodiment thus allows to add the ingredient in stages, which may be beneficial for the reaction.

In embodiments, the reactor arrangement further comprises a thermal jacket configured to be arranged around at least a part of the outerwall. The thermal jacket may be configured for thermal conditioning of the fluid in the reactor arrangement. Thermal conditioning may e.g. entail cooling, heating, or maintaining at a desired temperature. The thermal conditioning may improve the reaction.

Optionally the thermal jacket is coaxial with the reactor arrangement, e.g. with the inner flow element and the outer flow element. Being coaxial allows thermal expansion or contraction without introducing high stresses due to deviating expansion or contraction of the thermal jacket and outer flow element. This allows the reactor arrangement to be used for very high or low temperatures.

In embodiments, the outer flow element comprises a supporting flange which extends radially outwards from the outer wall, and the thermal jacket comprises a bottom flange configured to be arranged on the supporting flange. The supporting flange allows to removably arrange the thermal jacket, thereby increasing the modularity. It further provides a well-defined positioning of the thermal jacket. The supporting flange may further provide a releasable jacket connection for connecting the thermal jacket. Said releasable jacket connection allows to connect a thermal jacket when required, or remove it when not required. This further improves the modularity of the system.

In embodiments, the reactor system further comprises a pressure relief valve connected to the thermal jacket or to the outer flow element. The pressure relief valve may e.g. be arranged on a top section of the reactor arrangement. The pressure relief valve may e.g. be fluidly connected to the thermal jacket and be configured to release thermal working fluid. The thermal working fluid may e.g. exceed a predetermined pressure due to thermal expansion, wherein the pressure relief valve is configured to release thermal working fluid at said predetermined pressure. The pressure relief valve may e.g. be fluidly connected to the outer flow path, e.g. being arranged on an end section of the outer flow element. The pressure relief valve may e.g. be configured to relief pressure at a predetermined pressure, which optionally is adjustable. The pressure relief valve may relief the fluid into the environment or be connected to a collection chamber, e.g. when the product is too dangerous to be spilled. When present, the thermal jacket may comprise a thermal relief valve recess providing space for the thermal relief valve.

In embodiments, the inner wall and/or the outer wall have a cylindrical shape.

In embodiments, the outer flow element has a first end that is configured to be structurally fixed and a second end that is configured to be structurally free. In embodiments, the inner flow element has a first end that is configured to be structurally fixed and a second end that is configured to be structurally free. The structurally free second end allows thermal expansion. Optionally, the first and second ends of the inner and outer flow element are arranged such that the inner and outer flow element can thermally expand it the same direction.

In embodiments wherein the reactor arrangement comprises the thermal jacket, the thermal jacket may also have a first end that is configured to be structurally fixed and a second end that is configured to be structurally free. Optionally the thermal jacket is configured to thermally expand in the same direction as the inner and outer flow element. The first end of the reactor arrangement can e.g. be at the bottom flange which can be connected to the supporting flange of the outer flow element.

In embodiments, wherein the inner wall has a first diameter and the outer wall has a second diameter, wherein the ratio of the second diameter to the first diameter is between 1.5 and 10, e.g. between 2 and 5.

In embodiments, the inner wall has a first diameter which is 5 inch or smaller, for example 3 inch or smaller; and/or an inner wall length which is 10m or smaller, for example 6m or smaller.

In embodiments, the outer wall has a second diameter which is 25 inch or smaller, for example 15 inch orsmaller, for example 10 inch or smaller; and/oran outer wall length which is 10m or smaller, for example 6m or smaller.

In embodiments, the reactor system is a reactor system for gas phase reactors, e.g. ammonia synthesis.

In embodiments, the reactor system is a reactor system for gas/liquid packed bed catalyst reactions. For example, the outer flow path may be a catalyst space.

In embodiments, the reactor system is a reactor system for liquid/solid dispersion, for example liquid phase oxidation, for example wastewater wet air oxidation.

In embodiments, the reactor system is a reactor system for a multiphase/sequence backbone addition, for example for emulsions for pharmaceutical, cosmetic, personal, or home care applications.

In embodiments, the reactor system is a reactor system for a multiphase/sequence food process, for example continuous cooking, for example with heat/temperature sensitive products.

The invention further relates to a thermal conditioning system for a reactor system comprising at least one reactor arrangement, The reactor system may in embodiments be a reactor system according to one or more of the embodiments described above; however, the thermal conditioning system is not limited thereto. The thermal conditioning system is configured for thermal conditioning of a product, e.g. a fluid, which is exposed to a reaction in the reactor arrangement. Within this context, thermal conditioning includes heating, cooling, or maintaining at a desired temperature. Generally, the object of the thermal conditioning is to improve the reaction.

In embodiments, the thermal conditioning system comprising at least one thermal jacket, wherein the thermal jacket is configured to be arranged around at least a part of the reactor arrangement. The thermal jacket comprises a first thermal connector and a second thermal connector, configured to receive a thermal fluid. The thermal jacket is configured to guide the thermal fluid to flow from the first thermal connector to the second thermal connector, or vice versa. When flowing within the thermal jacket, the thermal fluid comes into contact with the reactor system, e.g. with an outer flow element of the reactor system. This allows heat transfer between the thermal fluid and a fluid that is present within the reactor system. Optionally, the thermal fluid is configured to flow in an opposite direction of the fluid in the reactor system at a contact surface. This may enhance the transfer of thermal energy. The contact surface may e.g. be an outer flow element of the reactor system. The first and second thermal connectors can e.g. be flanges or tri-clamps.

In embodiments, the thermal conditioning system comprises a first rotatable connection pipe rotatably connected to the first thermal connector. The first rotatable connection pipe is configured to be rotated between a first position for connecting the first thermal connector to a first thermal fluid supply line for a first thermal fluid, and a second position for connecting the first thermal connector to a second thermal fluid supply line for a second thermal fluid. The thermal conditioning system further comprises a second rotatable connection pipe rotatably connected to the second thermal connector. The second rotatable connection pipe is configured to be rotated between a first position for connecting the second thermal connector to a first thermal fluid return line for the first thermal fluid, and a second position for connecting the second thermal connector a second thermal fluid return line for the second thermal fluid.

Using the first and second rotatable connection pipe allows to change the thermal conditioning from a first thermal fluid to a second thermal fluid. This improves the applicability of the thermal jacket and its modularity. For example, the first thermal fluid can be a heating fluid and the second thermal fluid can be a cooling fluid. It is also possible that the first and second thermal fluid are both cooling fluids or both heating fluids, wherein one is at a higher temperature than the other. Optionally, the first and second thermal fluid are fluidly connected to each other. For example, the thermal fluid may first flow through the first thermal fluid supply line at a high temperature, and then through the second thermal fluid supply line at a lower temperature because it has already cooled down.

In embodiments, the first rotatable connection pipe and/or the second rotatable connection pipe comprise two elbows, preferably each of 90 degrees. Preferably a first end of the first rotatable connection pipe extends parallel to a second end of the first rotatable connection pipe; and/or a first end of the second rotatable connection pipe extends parallel to a second end of the second rotatable connection pipe. This allows for the connectors of the respective first and second thermal fluid supply line and the first and second thermal fluid return line to extend in parallel as well, which allows easier design and manufacturing.

In embodiments, the thermal jacket is configured to be rotated relative to the reactor arrangement between a first jacket position for conditioning the tubular reactor arrangement with the first thermal fluid, and a second jacket position for conditioning the tubular reactor arrangement with a further thermal fluid. By providing the option to change from the first thermal fluid to the further thermal fluid by a simple rotation of the thermal jacket, the applicability and modularity of the thermal jacket has been improved. For example, the thermal jacket may be rotated by 90 degrees or by 180 degrees between the first and second jacket position. In the first jacket position, the first thermal connector may be connected to a supply line for the first thermal fluid and the second thermal connector to a return line for the first thermal fluid, or vice versa. In the second jacket position the first thermal connector may be connected to a supply line for the further thermal fluid and the second thermal connector to a return line for the further thermal fluid, or vice versa.

Optionally the first thermal fluid is a heating fluid and the further thermal fluid is a cooling fluid. Optionally the first thermal fluid is a heating fluid at a first temperature and the further thermal fluid is a heating fluid at a second temperature, wherein the first temperature is greater than the second temperature. Optionally the first thermal fluid is a cooling fluid at a first temperature and the further thermal fluid is a cooling fluid at a second temperature, wherein the first temperature is greater than the second temperature.

It can be seen that the flexibility in use and modularity of the thermal conditioning system can advantageously be improved by implementing at least one of the first and second rotatable connection pipes on the one hand; and the rotatable thermal jacket on the other hand. If either of these is applied individually, two thermal fluids can be used for thermal conditioning. If both are applied together, four thermal fluids can be used for thermal conditioning, even further improving the flexibility in use and modularity.

In embodiments, the thermal conditioning system further comprises a valve fluidly connected to the first thermal connector or to the second thermal connector. The valve may e.g. be arranged between the respective thermal connector and a supply or return line for the thermal fluid. The valve may e.g. be arranged between the respective thermal connector and the respective rotatable connecting pipe. By opening or closing the valve, the flow of thermal fluid can be enabled or stopped, respectively. Optionally the thermal conditioning system comprises an actuator configured to open and close the valve, wherein optionally the actuator is controlled by a control system. Optionally, the actuator is configured to arrange the valve in one or more partially open positions, e.g. wherein the valve is a control valve. This allows to control the amount of thermal fluid flowing through the thermal jacket, and as such the heat transfer to which the fluid in the reactor system is exposed.

In embodiments, the thermal conditioning system comprises one or more thermal flow diversion elements. Said thermal flow diversion elements are e.g. protrusions extending into a thermal flow path from the thermal jacket, or from an outer wall of the reactor arrangement. The thermal flow diversion elements may cause turbulence in the thermal fluid. In practice, the thermal fluid closes to the reactor arrangement will cool or heat faster, depending on the application. The thermal flow diversion elements cause this part of the thermal fluid to be mixed with the rest, which results in a more even temperature and thus improves the heat transfer. Optionally said thermal flow diversion elements extend at a downwards inclination. By extending at said downwards inclination, it is avoided that thermal fluid accumulates on the thermal flow diversion elements.

In embodiments, the thermal conditioning system comprises a plurality of thermal jackets, which are each configured to be arranged around at least a part of another reactor arrangement of a plurality of reactor arrangements comprised by the reactor system. The thermal conditioning system can furthermore include several aspects of modularity, as described in the embodiments above. This can e.g. include implementing at least one of the first and second rotatable connection pipes on the one hand and the rotatable thermal jacket on the other hand.

The modularity also allows to adapt the thermal conditioning on the level of each reactor arrangement. For example, at least one reactor arrangement can be conditioned with a first thermal fluid and at least another reactor arrangement can be conditioned with a second or a further thermal fluid. The thermal conditioning can thus be configured based on how far in the reaction process the fluid is in the respective reactor arrangement. This can improve the reaction, and also improve the efficiency heat transfer by applying optimal heat difference based on the temperature difference between the thermal fluid and the product in the respective reactor arrangement.

In embodiments, the thermal conditioning system is a system for gas phase reactors, e.g. ammonia synthesis.

In embodiments, the thermal conditioning system is a system for gas/liquid packed bed catalyst reactions. For example, the outer flow path may be a catalyst space.

In embodiments, the thermal conditioning system is a system for liquid/solid dispersion, for example liquid phase oxidation, for example wastewater wet air oxidation.

In embodiments, the thermal conditioning system is a system for a multiphase/sequence backbone addition, for example for emulsions for pharmaceutical, cosmetic, personal, or home care applications.

In embodiments, the thermal conditioning system is a system for a multiphase/sequence food process, for example continuous cooking, for example with heat/temperature sensitive products.

The invention further relates to a method for performing a reaction and/or mixing at least two substances. Although the method can be performed with the reactor system and/or the thermal conditioning system according to the invention; neither the reactor system nor the thermal conditioning system are limited thereto. Features explained with reference to the reactor system and the thermal conditioning system have the same meaning with respect to the method unless explicitly defined otherwise. Features explained with reference to the reactor system and the thermal conditioning system can be applied mutatis mutandis to the method to achieve the described advantageous effects.

In embodiments, the method is a method for performing a gas phase reaction, e.g. ammonia synthesis.

In embodiments, the method is a method for performing for gas/liquid packed bed catalyst reaction. For example, the outer flow path may be a catalyst space.

In embodiments, the method is a method for performing a liquid/solid dispersion, for example liquid phase oxidation, for example wastewater wet air oxidation.

In embodiments, the method is a method for performing a multiphase/sequence backbone addition, for example for emulsions for pharmaceutical, cosmetic, personal, or home care applications.

In embodiments, the method is a method for performing a multiphase/sequence food process, for example continuous cooking, for example with heat/temperature sensitive products.

The invention relates to a method for performing a reaction and/or mixing at least two substances, comprising at least a step of using the tubular reaction system and/or the thermal conditioning system according to one or more of the embodiments described herein.

Exemplary embodiments of the invention are described using the figures. It is to be understood that these figures merely serve as example of how the invention can be implemented, and are in no way intended to be construed as limiting for the scope of the invention and the claims. Like features are indicated by like reference numerals along the figures. In the figures:
Fig 1a: shows an isometric view of a reactor arrangement and thermal jacket;
Fig. 1b: shows a side view of the reactor arrangement and thermal jacket;
Fig. 1c: shows the section AA indicated in fig. 1b;
Fig. 1d: shows a horizontal cross section of the reactor arrangement and thermal jacket;
Fig. 1e: shows a closer view of the circle indicated in fig. 1c;
Fig. 1f: shows a closed view of the rectangle indicated in fig. 1c;
Fig. 1g: shows a top view of a connection section;
Fig. 1h: shows a side view of the connection section;
Fig. 1i shows the section AA indicated in fig. 1h;
Fig. 1j: shows the section BB indicated in fig. 1h;
Fig. 2a: shows a reactor system having two reactor arrangements directly connected to each other;
Fig. 2b: shows a reactor system having two reactor arrangements connected via a pipe section;
Fig; 2c: shows a reactor system having two reactor arrangements having an outlet funnel;
Fig. 3a: shows an isometric view of a reactor arrangement connected to a reversed reactor arrangement;
Fig. 3b: shows a side view of fig. 3a;
Fig. 3c: shows section AA indicated in fig. 3b;
Fig. 3d: shows a closer view of the rectangle indicated in fig. 3c;
Fig. 4a and fig. 4b: show a reactor arrangement with a tank reactor;
Fig. 4c: illustrates a reactor system of which three reactor arrangements are shown, one of the reactor arrangements having a tank reactor;
Fig. 4d: shows a reactor arrangement having with an agitator;
Fig. 5a-5d: illustrates four possible configurations of a thermal conditioning system;
Fig. 5e: illustrates a reactor system having a plurality of reactor arrangement and different configurations of the thermal conditioning system;
Fig. 6: illustrates components of a modular reactor system

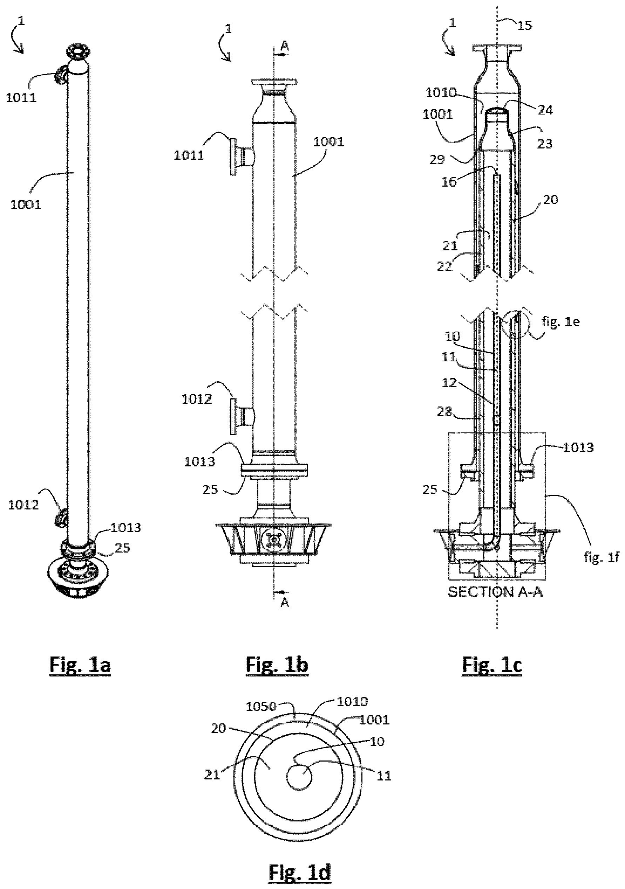

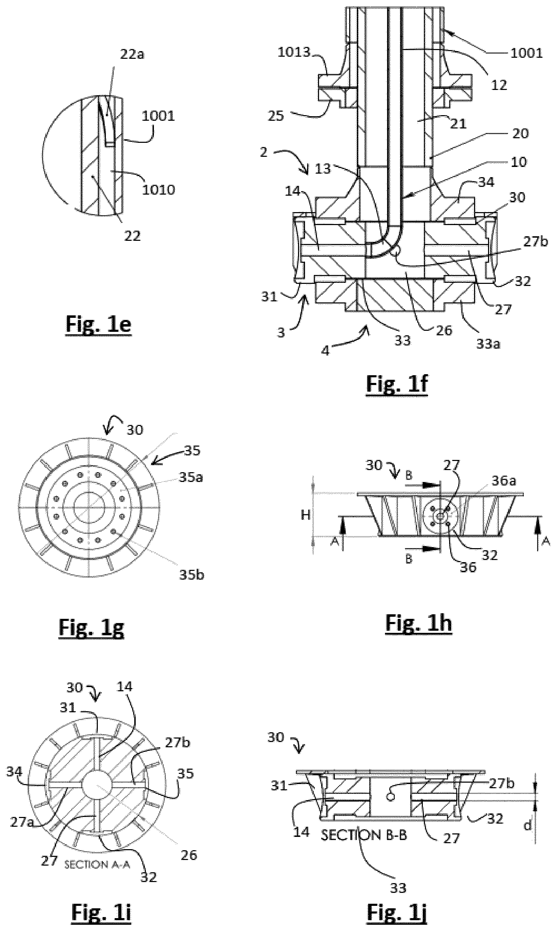

Fig. 1a-1f illustrate an embodiment of a reactor arrangement 1, wherein fig 1a shows an isometric view of a reactor arrangement 1 and thermal jacket 1001; Fig. 1b shows a side view; Fig. 1c shows the section AA indicated in fig. 1b, Fig. 1d shows a horizontal cross section; Fig. 1e shows a closer view of the circle indicated in fig. 1c; and Fig. 1f shows a closed view of the rectangle indicated in fig. 1c.

The reactor arrangement 1 is configured to guide at least a fluid (gas or liquid) for flowing through the reactor arrangement 1. While flowing through the reactor arrangement 1, said fluid can be exposed to a reaction, e.g. with another substance, and/or be mixed with another substance. Said other substance may be a fluid (gas or liquid) or a solid substance, e.g. solid particles. A pump or compressor (not shown) may be provided for forcing the flow of the fluid.

The reactor arrangement 1 comprises an inner flow element 10 (see fig. 1c and 1f). The inner flow element 10 comprises a first inner end 14 which is connected to a first fluid end 3 of the reactor arrangement 1. Through this first inner end 14 the fluid can flow into the inner flow element 10. The inner flow element 10 further comprises an innerwall 12, which in the shown example is connected to the first inner end 14 via a bend 13. The inner wall 12 has a longitudinal axis 15 which extends in a vertical direction. An inner flow path 11 defined within the inner wall 10 guides the fluid upwards.

The reactor arrangement 1 further comprises an outer flow element 20. The outer flow element 20 comprises an outer wall 22, which defines an outer flow path 21 between the outer wall 22 and the inner wall 12. In the shown embodiment the inner wall 12 and the outer wall 22 are coaxial, meaning that the outer wall 22 has the same longitudinal axis 15 as the inner wall 21. The fluid is guided to flow downwards in the outer flow path 21 towards a first outer end 26 of the outer flow element 20, which is connected to a second fluid end 4 of the reactor arrangement 1.

The shown embodiment of the reactor arrangement 1 thus first guides the fluid upwards through the inner flow element 10, and then allows the fluid to flow downwards, partially under the influence of gravity, in the outer flow element 20. This may in particular be advantageous when the fluid comprises a liquid and solid particles. Although the figures will be described for this embodiment, it will be understood that the reverse flow direction is also possible. For example, if the fluid comprises a gaseous substance, it may be advantageous if the fluid flows first upwards through the outer flow element 20 and then downwards through the inner flow element 10.

The inner flow path 11 within the inner wall 12 may be relatively narrow, such that the flow velocity of the fluid is relatively large. A plug-flow like behavior can be achieved in the inner flow path 11. This increases the turbulence and improves the reaction. The outer flow path 21, which in this case has an annular cross-section (see fig. 1d), may be larger than the inner flow path 11, such that the velocity of the fluid decreases in the outer flow path 21. Preferably, the velocity in the outer flow path is greater than a sedimentation velocity, which may depend on the substances in the fluid.

As best visible in fig. 1c, the inner flow element 10 has a second inner end 16, which e.g. opens into the outer flow element 20. The second inner end 16 fluidly connects, in this case directly, the inner flow element 10 and the outer flow element 20. The fluid thus flows from the inner flow element 10 into the outer flow element 20 via said second inner end 16. The outer flow element 20 has a straight wall section 28 that surrounds the inner wall 12, wherein said straight wall section 28 guides the fluid when flowing downwards. Above the straight wall section 28 the outer flow element 20 can e.g. have an end section 29, which is connected to the straight wall section 28. The end section 29 comprises a conical wall 23 and/or an end cap 24. This advantageously guides the fluid to reverse its flow direction from upwards to downwards after flowing out of the second inner end 16 of the inner flow element 10.

In fig. 1f illustrates an advantageous connection section 30 that the reactor arrangement 1 may comprise. Said connection section 30 may e.g. be arranged at a bottom end 2 of the reactor arrangement. In the shown embodiment, the connection section 30 is connected to a connection section flange 34, which is arranged horizontally.

The connection section 30 comprises a first connector 31, which in this case is a flange. The first connector 31 can be used to connect the first fluid end 3 of the reactor arrangement 1 and the first inner end 14 of the inner flow element 10 to other components, such as a pump, compressor, or another reactor arrangement. The first connector 31 is arranged vertically, meaning that e.g. a horizontally extending pipe section can be connected to the first connector.

The connection section 30 comprises a second connector 32, which in this case is a flange. The second connector 32 can be used to connect the second fluid end 4 of the reactor arrangement 1 to other components via a first second fluid end branch 27. The second connector 32 is arranged vertically.

The connection section 30 comprises a third connector 33, which in this case is a flange. The third connector 33 can be used to connect the second fluid end 4 of the reactor arrangement 1 to other components. In this case the third connector 33 is closed by a connector cap 33a and thus not connected to any further components. The connector 33 is arranged horizontally. It can be seen in fig. 1f that the third connector 33 is larger than the first 31 and second connector 32, which e.g. allows to connect larger equipment or piping to the third connector 33.

Fig. 1g-1j show the connection section 30 in more detail, wherein fig. 1g shows a top view of a connection section 30; fig. 1h shows a side view of the connection section 30; fig. 1i shows the section AA indicated in fig. 1h, and fig. 1j: shows the section BB indicated in fig. 1h.

In the cross section shown in fig. 1f only the first 31, second 32, and third connector 33 are visible. The cross section in fig. 1i, however, shows that the connection section 30 may also comprise a fourth connector 34 and fifth connector 35. The fourth 34 and fifth connector 35 are both arranged vertically, similar to the first 31 and second connector 32. The fourth connector 34 is connected to a further second fluid end branch 27a and the fifth connector 35 to another further second fluid end branch 27b. The fourth connector 34 and the fifth connector 35 thus allow to connect other components to the second fluid end 4.

Fig. 1g illustrates in the top view that the connection section 30 may comprise a top flange 35 having connecting surface 35a with connection openings 35b, e.g. for bolts, which can be used to connect the connection section 30 to the connection section flange 34. The bottom of the connection section 30 with the third connector 33 may be similar, for connecting other components the flange cap 33a as shown in the example of fig. 1f.

Fig. 1h illustrates that the second connector 32 may comprise connecting surface 36 with connection openings 36a, e.g. for bolts, which can be used to connect the second connector 32 to other components. The first 31, fourth 34, and fifth connector 35 may be embodied similarly.

Fig. 1j illustrates that the second fluid end branch 27 may have a diameter d, and the first inner end 14, the further second fluid end branch 27a and the other further second fluid end branch 27b may have the same diameter d.

The inner flow element 10, in particular the inner wall 12 but preferably also the first inner end 14, may e.g. have a first diameter of 3 inch. The first second fluid end branch 27 can have a diameter of the same size as the first diameter. The outer flow element 20, in particular straight wall section 28, may have a second diameter, which may be 1-10 times larger than the first diameter. For example, the second diameter may be 10 inch.

The connection section 30 provides several options for connecting the reactor arrangement 1, using standard connections such as flanges or tri-clamps. This makes it easy to connect the reactor arrangement 1 to any desired component, based on the reaction process the reactor arrangement 1 will be used. This increases the modularity and flexibility of the reactor arrangement 1, as will also be illustrated with further below.

Referring back to figs. 1a-1f, it can be seen that the reactor arrangement 1 may comprise a thermal jacket 1001. The thermal jacket 1001 may e.g. be part of a thermal conditioning system. In the shown example, the outer flow element 20 comprises a supporting flange 25 which extends radially outwards from the outer wall 22. The thermal jacket 1001 comprises a bottom flange 1013 which can be arranged on the supporting flange 25 for arranging the thermal jacket 1001. The bottom flange 1013 and supporting flange 25 provide a releasable connection which allows to easily connect or remove the thermal jacket 1001. This increases the modularity of the system.

The thermal jacket 1001 comprises a first thermal connector 1011 and a second thermal connector 1012. Although not shown in these figures, said first and second thermal connector 1011, 1012 can be connected to a supply and return line for a thermal working fluid. The thermal fluid is then guided from the second thermal connector 1012 to the first thermal connector 1011 via a thermal fluid flow path 1010. It is also possible that the thermal fluid flows in the reversed direction, however it may be beneficial for the thermal fluid to flow in the opposite direction of the fluid in the outer flow path 21 to enhance the transfer of thermal energy.

When flowing through the thermal fluid flow path 1010, the thermal fluid comes into contact with the outer flow element 20 and thermally conditions the fluid that is arranged in the outer flow element 20. The thermal fluid can e.g. be a heating or cooling fluid.

Optionally the thermal jacket 1001 is coaxial with the outer flow element 20 and/or the inner flow element 10. This may in particular be advantageous to allow thermal expansion or contraction of the relevant components without introducing high stresses.

Fig. 1d further illustrates that optionally an insulation layer 1050 can be arranged around the thermal jacket 1001 for reducing thermal losses from the thermal jacket 1001. The insulation layer 1050 is not shown in the other figures for the sake of clarity. In embodiments wherein the reactor arrangement 1 does not comprise a thermal jacket 1001, it is also possible to arrange the insulation layer 1050 around the outer flow element 20.

Fig. 1e illustrates a thermal flow diversion element 22a extending from the outer wall 22 in the thermal fluid flow path 1010. The flow diversion element 22a causes turbulence in the flow of the thermal fluid, which enhances mixing of more and less heated or cooled thermal fluid. In practice a plurality of such thermal flow diversion elements 22a can be provided.

Fig 1c illustrates that the inner flow element 10 is structurally free at the second inner end 16. This allows thermal expansion in the direction which in fig. 1c is upwards. Also the end section 29 of the outer flow element 20 is structurally free, which also allows thermal expansion in the same direction. This allows the inner flow element 10 and the outer flow element 20 to thermally expand or contract in the same direction without limitation, which allows the reactor arrangement 1 to be used in extreme temperatures. Furthermore, also the thermal jacket 1001 can expand in the same direction because it only structurally fixed by the bottom flange 1013.

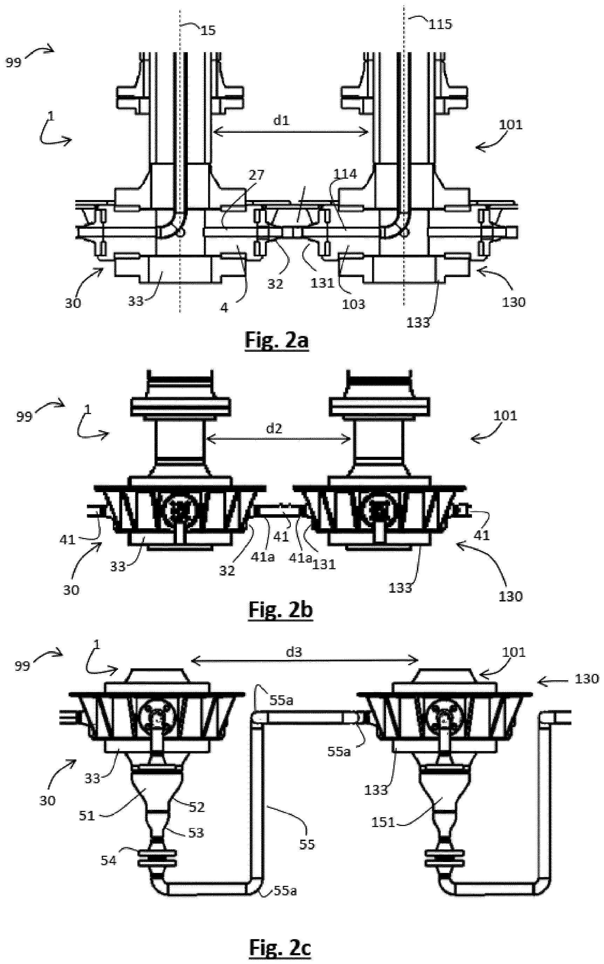

Figs. 2a-2c illustrate a reactor system 99 that comprises a plurality of reactor arrangements 1, 101. In these figures only a first reactor arrangement 1 and a second reactor arrangement 101 are shown, but it will be understood that in practice the reactor system 99 can comprise many more reactor arrangements. The first reactor arrangement 1 and second reactor arrangement 101 may be embodied similar to each other, e.g. as shown in figs. 1c-1f. The features of the second reactor arrangement 101 are indicated by the same reference numerals added with an even "100" as the similar features of the first reactor arrangement.

Figs. 2a-2c illustrate that the plurality of reactor arrangements 1, 101 can be arranged in series. The second fluid end 4 of the first reactor arrangement 1 is arranged upstream of the first fluid end 103 the second reactor arrangement 101. The fluid thus flows first through the first reactor arrangement 1 and then through the second reactor arrangement 101 and further reactor arrangements, when present. The more reactor arrangements 1, 101 are present, the longer a reactor length is and thus the longer the fluid is exposed to the reaction. Using modular reactor arrangements 1, 101, it is possible to arrange as many reactor arrangements 1, 101 in series as desired, based on the intended application of the reactor system 99. The alternation between inner flow paths and outer flow paths advantageously enhances the reaction, e.g. due to variations in flow velocity.

Fig. 2a further illustrates that the longitudinal axis 15 of the inner wall 12 and the outer wall 22 of the first reactor arrangement 1 extends parallel to the longitudinal axis 115 of the inner wall 112 and the outer wall 122 of the second reactor arrangement 101. The plurality of reactor arrangements 1, 101 are thus arranged physically parallel to each other, but fluidically in series. Furthermore, they can be arranged vertically. The plurality of reactor arrangements 1, 101 are arranged horizontally spaced of each other. In the example of fig. 2a, the first reactor arrangement 1 is spaced of the second reactor arrangement 101 by a spacing distance d1, in fig. 2b by a spacing distance d2 and in fig. 2c by a spacing distance d3. The shown arrangements allow for a relatively compact reactor system 99, while still obtaining a relatively long reactor path.

Fig. 2a shows a first example of how the first reactor arrangement 1 and the second arrangement 101 can be fluidly connected to each other. In this example, the second connector 32 of the connection section 30 of the first reactor arrangement 1 is directly connected to the first connector 131 of the connection section 130 of the second reactor arrangement 101. The first second fluid end branch 27 of the first reactor arrangement 1 fluidly connects the second fluid end 4 of the first reactor arrangement 1 to the first fluid end 103 of the second reactor arrangement 101. The third connector 33 of the first reactor arrangement 1 is closed. The embodiment shown in fig. 2a allows for a very compact reactor system 99.

Fig. 2b shows a second example. A connection pipe 41 is connected to the second connector 32 of the connection section 30 of the first reactor arrangement 1 is and to the first connector 131 of the connection section 130 of the second reactor arrangement 101. The connection pipe 41 (via the first second fluid end branch of the first reactor arrangement 1) fluidly connects the second fluid end 4 of the first reactor arrangement 1 to the first fluid end 103 of the second reactor arrangement 101. The third connector 33 of the first reactor arrangement 1 is closed. The connection pipe 41 may comprise one or more bends 41a for allowing thermal expansion or contraction, thereby making this embodiment particularly advantageous for applications with very high or low temperatures.

Fig. 2c shows a third example. An outlet funnel 51 is connected to the third connector 33 of the connection section 30 of the first reactor arrangement 1. At a bottom connector 54 (which in this case is a flange) of the outlet funnel 51 a connection pipe 55 is connected. The connection pipe 55 fluidly connects the second fluid end 4 of the first reactor arrangement 1 to the first fluid end 103 of the second reactor arrangement 101. The connection pipe 55 may comprise one or more bends 55a for allowing thermal expansion or contraction. The second connector 32 of the connection section 30 is closed in this example. The outlet funnel 51 advantageously collects the fluid (e.g. with undissolved substances, e.g. solid particles such as additives or ingredients) falling down in the outer flow path, and centers it towards a funnel bottom 53 using conical walls 52. The outlet funnel 51 reduces the accumulation of product in undesired location, and thus the frequency that cleaning is required. Furthermore, the outlet funnel 51 can easily be cleaned due to (flange) connection with the third connector 33 and the bottom connector 54.

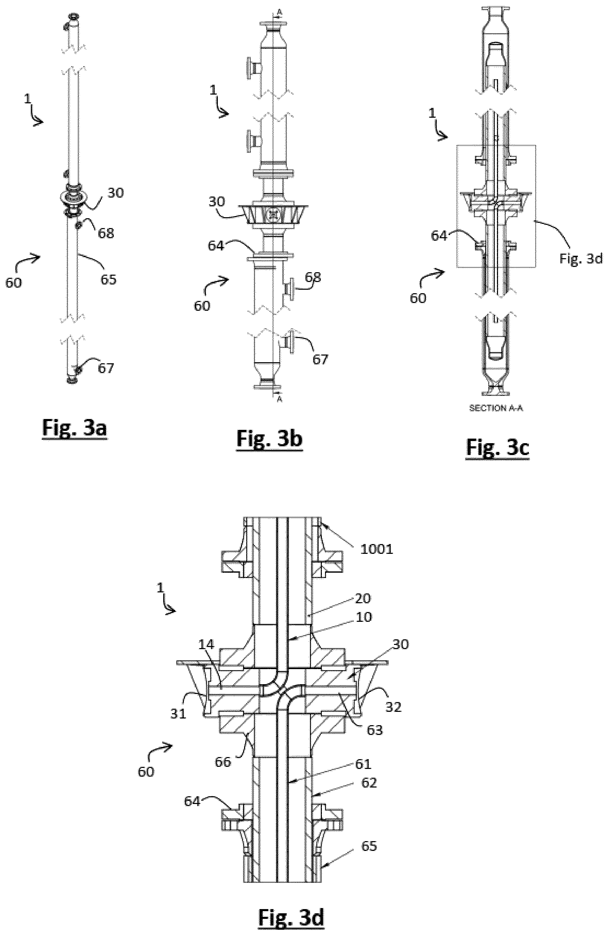

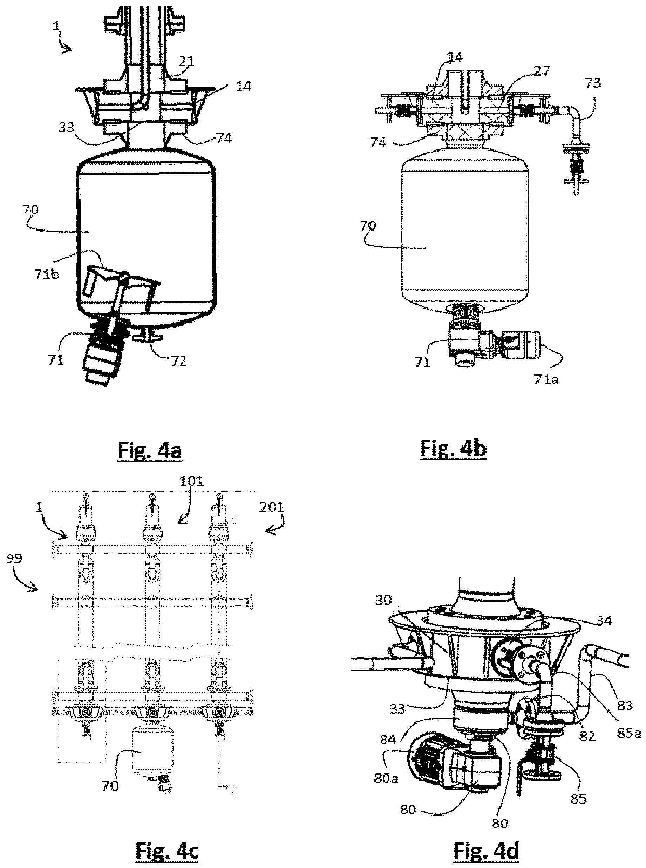

The connection section 30 of the reactor arrangements 1, 101 is very advantageous for connecting various components, including further reactor arrangements. This makes the system very flexible and modular. Further examples of components that can be connected to the reactor arrangement, e.g. via the connection section 30, are illustrated in figs. 3a-3d and figs. 4a-4d.

Fig. 3a-3d shows a reversed reactor arrangement 60, wherein fig. 3a shows an isometric view, fig. 3b shows a side view, fig. 3c shows section AA indicated in fig. 3b, and fig. 3d shows a closer view of the rectangle indicated in fig. 3c.

The reversed reactor arrangement 60 is for the most part similar to the reactor arrangement 1, although it is arranged upside down as can be seen. The connection section flange 66 of reversed reactor arrangement 60 is connected to the third connector 33 of the connection section 30 of the rector arrangement 1. The reversed reactor arrangement 60 in this example does not comprise a connection section; however it is also possible that the reversed reactor arrangement 60 does comprise a connection section, wherein e.g. the third connector of the reversed reactor arrangement 60 is connected to the third connector 33 of the reactor arrangement 1. In this example, the fluid flows into the reactor arrangement 1 via the first inner end 14 and is guided upwards through the inner flow element 10. Thereafter it flows down through the outer flow element 20 and a reversed outer flow element 62, and is then guided upwards again through a reversed inner flow element 61 to an first outer end 63. In other embodiments the fluid may flow in the opposite direction. The reversed reactor arrangement 66 may comprise a thermal jacket 65, e.g. connected to a support flange 64. The use of the reversed reactor arrangement 60 advantageously further increases the reactor length which the fluid is exposed to, while keeping the footprint small and the reactor system compact.

In fig. 4a and fig. 4b a tank reactor 70 is connected to the third connector 33 by means of a tank reactor connector 74, which in this case is a flange. The fluid (e.g. with undissolved solid particles) falling down in the outer flow path is collected in the tank reactor 70. In the tank reactor 70 the fluid can be actively mixed, for further enhancing the reaction and/or mixing. In the shown example the tank reactor 70 comprises a mechanical agitator 71 with a motor 71a, which is configured to move a mixer 71b arranged in the tank reactor 70. In the shown embodiment a connection pipe 73 is connected to the first outlet branch 27 via the second connector. This way, most of the fluid flows out of the reactor arrangement 1 via the first outlet branch, but the undissolved particles fall into the tank reactor 70 and are further mixed. Alternatively or in addition, a connection pipe can be connected to a bottom connector 72 of the tank reactor 71.

It may be possible to continuously enter and withdraw fluid from the tank reactor 70, thereby making the tank reactor 70 a continuous stirred-tank reactor. The fluid thus flows from the reactor arrangement 1 - where a plug-flow like behavior can be achieved - into the continuous stirred-tank reactor 7. The fluid can then be guided towards another reactor arrangement 1. The advantageous effects of both PFR and CSTR can thus be achieved in this embodiment.

Fig. 4c show a reactor system 99 having a first reactor arrangement 1, a second reactor arrangement 101, and a third reactor arrangement 201. Only for the second reactor arrangement 101 a tank reactor 70 is provided, as this may be sufficient to provide additional mixing. It is noted that because of the modularity of the system, any reactor arrangement 1, 101, 201 can be provided with individual additional components as needed, which may include any of the components described herein.

In fig. 4d an agitator 80 is connected to the third connector 33 by means of an agitator connector 84, which in this case is a flange. An agitator inlet 81 receives the fluid (e.g. with undissolved solid particles) falling down in the outer flow path via the second fluid end 4 of the reactor arrangement 1. At an outlet connector 82 of the agitator 80 a connection pipe 83 can be arranged. The agitator 80 is configured to agitate the fluid flowing through it, thereby enhancing the reaction and/or mixing. Optionally the agitator 80 is a magnetic agitator, subjecting the fluid, particles, product, and/or ingredients to magnetic forces.

Fig. 4d also illustrates that a sample valve 85 can be connected to one of the connectors, in this case the fourth connector 34 via an intermediate connector 85a. The sample valve 85 allows to take samples of the fluid, e.g. for checking the reaction.

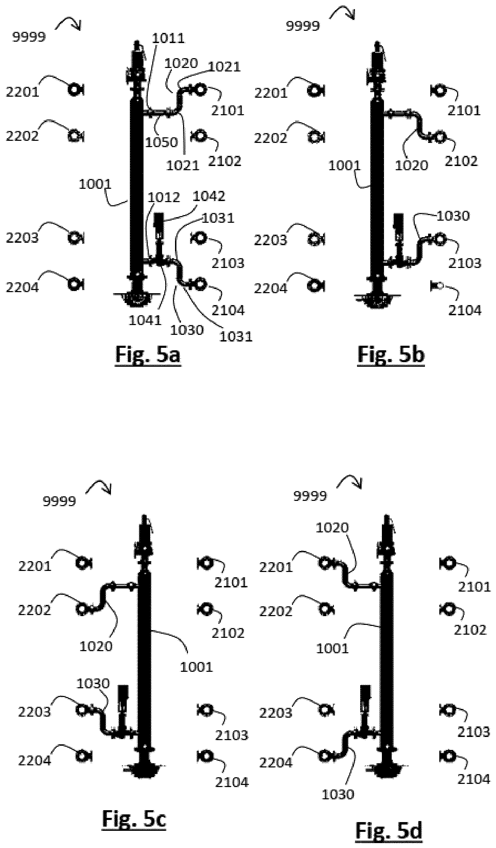

Figs 5a-5e illustrate a thermal conditioning system 9999. In the shown example the thermal conditioning system 9999 is used for a reactor system having reactor arrangements as shown in figs. 1c-4d; however the thermal conditioning system 9999 is not limited thereto and the described principles can also be applied to other reactor systems.

The thermal conditioning system 9999 comprises at least one thermal jacket 1001 configured to be arranged around at least a part of a reactor arrangement 1. The thermal jacket 1001 comprises a first thermal connector 1011 and a second thermal connector 1012. Thermal fluid can be received in one of the first 1011 and second thermal connector 1012 and guided to the other of the first 1011 and second thermal connector 1012, e.g. via a thermal fluid flow path. In said thermal fluid flow path the thermal fluid comes into contact with the reactor arrangement 1 (in this example with the outer flow element). A transfer of thermal energy can take place between the thermal fluid and the fluid in the reactor arrangement 1. It may be advantageous that the thermal fluid and the fluid to be thermally conditioned flow in opposite directions, but this is not required.

The thermal fluid can be a heating or a cooling fluid, which is configured to either supply or withdraw thermal energy. The thermal fluid can be guided through a heat exchanger (not shown) for the reversed thermal energy transfer and then be guided back again to the thermal jacket 1001. A pump (not shown) can be provided for making the thermal fluid flow.

In the shown example, the thermal conditioning system can thermally condition the reactor arrangement with four different thermal fluids, which may be different substances or the same substance at different temperature. For example, a first thermal fluid can be a heating fluid and a second thermal fluid can be a cooling fluid. It is also possible that more than one of thermal fluids are a heating or cooling fluid, but at different temperatures. In general, a heating fluid is a greater temperature than the fluid to be thermally conditioned, and a cooling fluid at a lower temperature.

The thermal conditioning system 9999 comprises for the first thermal fluid a first thermal fluid supply line 2104 and a first thermal fluid return line 2101. For the second thermal fluid the thermal conditioning system 9999 comprises a second thermal fluid supply line 2103, as well as second thermal fluid return line 2102. The first thermal fluid and the second thermal fluid may both be a heating fluid. In particular, the first thermal fluid and the second thermal fluid may be the same thermal fluid. Said thermal fluid may be configured to first flow through the first thermal fluid supply line 2104, and thereafter through the second thermal fluid supply line 2103. By the time the fluid flows through the second thermal fluid supply line 2103, it has already lost some of the thermal energy and is therefore less warm. The second thermal fluid can thus be used to thermally condition the fluid in the reactor system with a heating fluid at a lower temperature than the first thermal fluid.

The thermal conditioning system 9999 comprises for a first further thermal fluid a first further thermal fluid supply line 2204 and a first further thermal fluid return line 2201. For a further second thermal fluid the thermal conditioning system 9999 comprises a second further thermal fluid supply line 2203, as well as second further thermal fluid return line 2202. The first thermal fluid and the second thermal fluid may both be a cooling fluid. Similarly as explained above for the first and second thermal fluid, the first and second further thermal fluid may be the same cooling fluid.

The thermal jacket 1001 is configured to be rotated relative to the reactor arrangement 1. In this example said rotation is around a longitudinal axis of the thermal jacket 1001, which in some embodiments may coincide with a longitudinal axis of the innerwall and outer wall of the inner and outer flow elements of the reactor arrangement 1001 (as explained with reference to fig. 1c). In particular, the thermal jacket 1001 is rotated between a first jacket position (shown in figs. 5a and 5b) and a second jacket position (shown in figs. 5c and 5d). In the first jacket position the first and second thermal connectors 1011, 1012 can be connected for guiding the first thermal fluid or the second thermal fluid. In the second jacket position the first and second thermal connectors 1011, 1012 can be connected for guiding the first and second further thermal fluid.

Advantageously the rotation of the thermal jacket 1001 allows to switch thermal fluid, e.g. from a heating fluid to a thermal fluid. The rotation can e.g. be accomplished by means of a bottom flange of the thermal jacket 1001 and supporting flange of the reactor arrangement, as explained with reference to figs. 1e-1f. Said flange connection allows to loosen the thermal jacket 1001 and rotate it between the first and second jacket position.

Figs. 5a-5d further illustrate that a first rotatable connection pipe 1020 is rotatably connected to the first thermal connector 1011. The rotatable connection pipe 1020 can be rotated between a first position (shown in fig. 5a and fig. 5d) and a second position (shown in fig. 5b and fig. 5c). Similarly a second rotatable connection pipe 1030 is rotatably connected to the second thermal connector 1012. The second rotatable connection pipe 1030 can be rotated between a first position (shown in fig. 5a and fig. 5d) and a second position (shown in fig. 5b and fig. 5c). By rotating the first and second rotatable connection pipes 1020, 1030 the first and second thermal connector 1011, 1012 can be connected other supply and return lines for the thermal fluids (2101, 2102, 2103, 2104 in case of the first and second thermal fluid (fig. 5a and 5b) and 2201, 2202, 2203, 2204 in case of the first and second further thermal fluid (fig. 5c and 5d)).

In the shown example the first rotatable connection pipe 1020 is connected to the first thermal connector 1011 via an intermediate pipe 1050. Between the second rotatable connection pipe 1030 and the second thermal connector 1012 a valve 1041 is present. The valve 1041 is controlled by an actuator 1042 which in turn can be controlled by a control unit (not shown). The valve 1041 allows to stop the flow of thermal fluid in the thermal fluid flow path when this is not desired, e.g. when thermal conditioning is not required.

It can further be seen that the first and second rotatable connection pipes 1020, 1030 each comprise two elbows 1021, 1031, in this case of 90 degrees. This facilitates the connection to the respective thermal fluid supply and return lines, while also allowing said thermal fluid supply and return lines to be arranged parallel to each other.

The thermal jacket 1001 being rotatable between the first jacket position and the second jacket position on the one hand, and the first and second rotatable connection pipes 1020, 1030 on the other hand, both increase the flexibility and modularity of the thermal conditioning system 9999. They can be applied individually or in combination as in the shown example. It is possible to adapt the thermal conditioning for each reactor arrangement 1. This allows to adapt the thermal conditioning based on how far in the reaction the fluid is. It is furthermore possible to change this, e.g. when the reactor system is used for a different reaction.

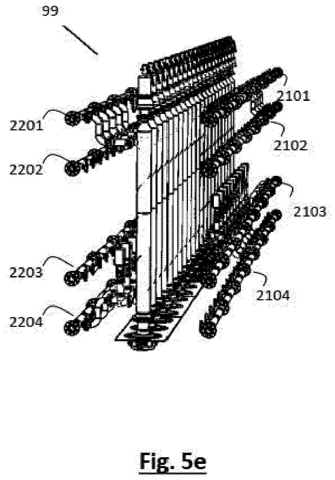

This is for example illustrated in fig. 5e which shows a reactor system 99 comprising a plurality of reactor arrangements arranged in series. The reactor arrangements that are illustrated in the front of the figure are being thermally conditioned by the first further thermal fluid as they are connected to the first further thermal fluid supply line 2204 and first further thermal fluid return line 2201. The reactor arrangements further back in this figure are connected to the second thermal fluid supply line 2103 and second thermal fluid return line 2102 for thermal conditioning with the second thermal fluid.

Fig. 5e further illustrates that the thermal fluid supply and return lines 2101, 2102, 2103, 2104, 2201, 2202, 2203, 2204 can be arranged parallel to each other and extending the direction that the series of reactor arrangements are physically arranged next to each other. They may further comprise connectors, e.g. flanges, for each reactor arrangement, in particular for the first and second rotatable connection pipes.

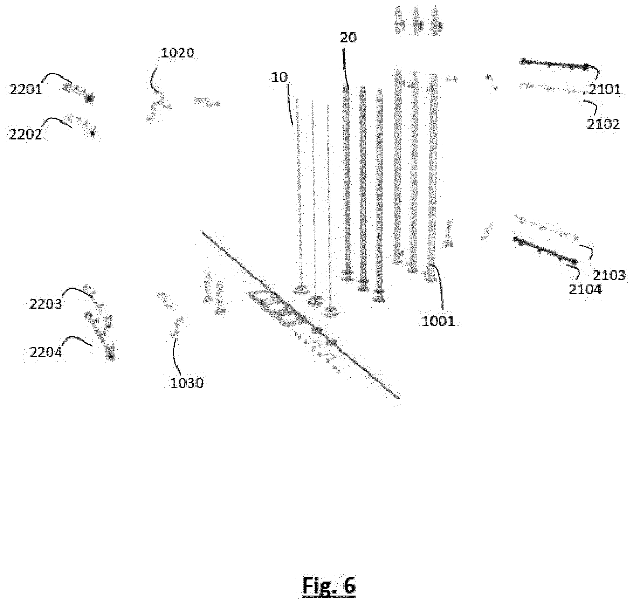

Fig. 6 shows an exploded view of a reactor system subset having three reactor arrangements 1, 101, 201. It can be seen that a very limited number of different components is required, which have been explained with reference to previous figures. This is due to the modularity of the system. Nevertheless, many different variations and lengths of reactor systems can be made with these components, which can be used for many different applications. Moreover, all the components individually can be made relatively small, which allows for easy transporting. They can be transported to the location where they are intended to be used, and the reactor system can be assembled on location based on the shipped components. A further advantage of the modularity of the system is that additional modules can be added at a later moment if the reactor system should be expanded.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated of each other. Any communication between components can be wired or wireless by known methods.

The actions performed by the control unit 200 can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. A reactor system (99), comprising a plurality of reactor arrangements (1, 101), each reactor arrangement comprising:
• a first fluid end (3), a second fluid end (4), wherein one of the first and second fluid end is a fluid inlet of the reactor arrangement, and the other of the first and second fluid end is a fluid outlet of the reactor arrangement,
• an inner flow element (10) comprising
• a first inner end (14) fluidly connected to the first fluid end,
• an innerwall (11) defining an inner flow path (12) within said inner wall, said inner flow path being fluidly connected to the first inner end,
• an outer flow element (20) comprising
• a first outer end (26) fluidly connected to the second fluid end,
• an outer wall (21) defining an outer flow path (22) between the outer wall and the inner wall, said outer flow path being fluidly connected to the first outer end,
wherein the inner wall and the outer wall are coaxial,
wherein the inner flow element has a second inner end (16) which opens into the outer flow element,
wherein the plurality of reactor arrangements are arranged in series, wherein the fluid outlet of a first reactor arrangement (1) of the plurality of reactor arrangements is arranged upstream of the fluid inlet of a second reactor arrangement (101) of the plurality of reactor arrangements.

2. Reactor system according to claim 1, wherein the inner wall and the outer wall have a longitudinal axis (15) which extend in a substantially vertical direction.

3. Reactor system according to claim 1 or claim 2, wherein the longitudinal axis (15) of the inner wall and outer wall of the first reactor arrangement extend parallel to the longitudinal axis (115) of the inner wall and the outer wall of the second reactor arrangement.

4. Reactor system according to any of the preceding claims, wherein the first reactor arrangement is arranged horizontally spaced of the second reactor arrangement.

5. Reactor system according to any of the preceding claims, wherein the outer wall has a straight wall section (28) which surrounds the inner wall, and an end section (29) connected to the straight wall section, wherein the end section comprises a conical wall (23).

6. Reactor system according to any of the preceding claims, each reactor arrangement comprising a connection section (30), preferably arranged at a bottom end (2) of the reactor arrangement, wherein the connection section comprises:
• a first connector (31), preferably arranged vertically, for connecting another reactor arrangement, piping, equipment, or appendages to the first fluid end,
• a second connector (32), preferably arranged vertically, for connecting another reactor arrangement, piping, equipment, or appendages to the second fluid end via a second fluid end branch, and
• a third connector (33), preferably arranged horizontally, for connecting another reactor arrangement, piping, equipment, or appendages to the second fluid end.

7. Reactor system according to any of the preceding claims, further comprising one of the following being connected, preferably via a connector, to the second fluid end of one of the reactor arrangements:
• an outlet funnel (51),
• an agitator (80),
• a reversed reactor arrangement (61),
• a tank reactor (70), optionally a continuous stirred-tank reactor,
• an ingredient adding module.

8. Reactor system according to any of the preceding claims, wherein at least one reactor arrangements further comprises a thermal jacket (1001) configured to be arranged around at least a part of the outer wall.

9. Reactor system according to claim 8, wherein the outer flow element comprises a supporting flange (25) which extends radially outwards from the outer wall, and the thermal jacket comprises a bottom flange (1013) configured to be arranged on the supporting flange.

10. Reactor system according to any of the preceding claims, wherein the inner wall and/or the outer wall have a cylindrical shape.

11. Thermal conditioning system for a reactor system (99) comprising at least one reactor arrangement (1, 101), the thermal conditioning system comprising:
• at least one thermal jacket (1001, wherein the thermal jacket
• is configured to be arranged around at least a part of the reactor arrangement,
• comprises a first thermal connector (1011) and a second thermal connector (1012), configured to receive a thermal fluid, wherein the thermal jacket is configured to guide the thermal fluid to flow from the second thermal connector to the first thermal connector or vice versa,
• a first rotatable connection pipe (1020) rotatably connected to the first thermal connector, and configured to be rotated between
• a first position for connecting the first thermal connector to a first thermal fluid supply line (2101) for a first thermal fluid, and
• a second position for connecting the first thermal connector to a second thermal fluid supply line for a second thermal fluid, and
• a second rotatable connection pipe rotatably connected to the second thermal connector, and configured to be rotated between
• a first position for connecting the second thermal connector to a first thermal fluid return line for the first thermal fluid, and
• a second position for connecting the second thermal connector a second thermal fluid return for the second thermal fluid.

12. Thermal conditioning system according to claim 11, wherein the first rotatable connection pipe and/or the second rotatable connection pipe comprise two elbows (1021, 1031), preferably each of 90 degrees.

13. Thermal conditioning system according to any of the preceding claims 11-12, wherein the thermal jacket is configured to be rotated relative to the reactor arrangement between a first jacket position for conditioning the tubular reactor arrangement with the first thermal fluid, and a second jacket position for conditioning the tubular reactor arrangement with a further thermal fluid.

14. Thermal conditioning system according to any of the preceding claims 11-13, further comprising a valve (1041) fluidly connected to the first thermal connector or to the second thermal connector.

15. Method for performing a reaction and/or mixing at least two substances, comprising at least a step of using the tubular reaction system and/or the thermal conditioning system according to one or more of the preceding claims.
